# DEMANDE DE BREVET EUROPEEN

(11) **EP 2 180 426 A1**
(43) Date de publication de la demande: **28.04.2010**
(21) Numéro de dépôt: 09173246.1
(22) Date de dépôt: 16.10.2009
(51) Int. Cl.: G06K 9/00, B60R 1/00, G06T 7/00

(54) **Procédé de détection d'un objet cible pour véhicule automobile**

(30) Priorité: 24.10.2008 FR 0805952
(71) Demandeur: VALEO VISION, 93012 Bobigny (FR)
(72) Inventeur: Rebut, Julien, 75019, PARIS (FR); Reilhac, Patrice, 73732, ESSLINGEN (DE)

(57) **Abrégé**

L'invention concerne un procédé de détection automatique d'un objet cible pour véhicule automobile. Elle se **caractérise en ce que** le procédé comporte les étapes de :
- créer deux vues aériennes respectivement à partir d'une image acquise par deux caméras du véhicule automobile, une vue aérienne étant créée par une projection de l'image dans un repère à trois dimensions de coordonnée d'altitude égale à zéro ;
- extraire des contours dans chaque vue aérienne créée ;
- approximer les contours extraits par des segments de droite, résultant en deux premières vues de segmentation ;
- construire dans chaque première vue de segmentation au moins un objet prédéterminé à partir des segments de droite, résultant en deux deuxièmes vues de segmentation ;
- superposer deux vues de segmentation ;
- sélectionner dans la superposition au moins un objet prédéterminé, correspondant à un objet cible vu d'une première caméra, qui a :
- une base commune avec un autre objet prédéterminé ; et
- une orientation différente de l'autre objet prédéterminé ; l'autre objet prédéterminé correspondant à l'objet cible vu d'une deuxième caméra.

## Description

### Domaine de l'invention

La présente invention concerne un procédé de détection automatique d'un objet cible pour véhicule automobile, et un dispositif de détection permettant de mettre en oeuvre ledit procédé.

Elle trouve une application particulière dans le domaine des véhicules automobiles.

### État de la technique

Dans le domaine des véhicules automobiles, un état de la technique antérieur connu de procédé de détection automatique d'un objet cible pour véhicule automobile utilise des capteurs de détection spécifiques tels que des capteurs à ultrasons couramment dénommés en anglais « UPA » pour « Ultrasonic Park Assist » pour détecter un objet cible tel qu'un piéton.

Un inconvénient de cet état de la technique antérieur est que ces capteurs ont une portée restreinte de zéro à deux mètres. Au-delà ils ne permettent pas ou très difficilement de détecter un objet cible qui pourrait être un obstacle à la conduite.

### Objet de l'invention

La présente invention a pour but un procédé de détection automatique d'un objet cible pour véhicule automobile, qui permet d'augmenter la portée de détection d'un objet cible.

Selon un premier objet de l'invention, ce but est atteint par un procédé de détection automatique d'un objet cible pour véhicule automobile, **caractérisé en ce qu**'il comporte les étapes de :
- créer deux vues aériennes respectivement à partir d'une image acquise par deux caméras du véhicule automobile, une vue aérienne étant créée par une projection de l'image dans un repère à trois dimensions de coordonnée d'altitude égale à zéro ;
- extraire des contours dans chaque vue aérienne créée, résultant en deux vues de contours ;
- approximer dans chaque vue de contours les contours extraits par des segments de droite, résultant en deux premières vues de segmentation ;
- construire dans chaque première vue de segmentation au moins un objet prédéterminé à partir des segments de droite, résultant en deux deuxièmes vues de segmentation ;
- superposer deux vues de segmentation ; et
- sélectionner dans la superposition au moins un objet prédéterminé, correspondant à un objet cible vu d'une première caméra, qui a :
   o une base commune avec un autre objet prédéterminé ; et
   o une orientation différente de l'autre objet prédéterminé ; l'autre objet prédéterminé correspondant à l'objet cible vu d'une deuxième caméra.

Comme on va le voir en détail par la suite, afin de détecter les objets cibles verticaux tels qu'un piéton, on utilise l'effet parallaxe de caméras vidéo qui se répercute sur les vues créées correspondant à des vues d'oiseau couramment appelées en anglais « bird view ». Ainsi, en utilisant des caméras vidéo pour la détection, on peut détecter un objet cible qui se trouve à une portée au delà de deux mètres.

Selon des modes de réalisation non limitatifs, le procédé présente en outre les caractéristiques suivantes :
- Les caméras sont des caméras grand angle. Cela permet d'utiliser des caméras qui sont utilisées classiquement pour d'autres fonctions telle qu'une aide à la conduite lors de manoeuvres à basse vitesse.
- L'étape d'extraction des contours s'effectue sur les segments de droite verticaux uniquement. Cela permet de gagner en temps de traitement.
- L'étape de construction d'un objet prédéterminé est effectuée avant l'étape de superposition de deux vues de segmentation.
- L'étape de construction d'un objet prédéterminé est effectuée après l'étape de superposition de deux vues de segmentation. Cela permet de gagner en temps de traitement, car après l'étape de superposition, il ne reste que les segments de droite qui ont un point de contact avec le sol.
- L'étape d'approximation des contours extraits s'effectue au moyen d'une transformée de Hough. La transformée de Hough permet d'avoir une bonne robustesse contre les discontinuités d'une forme telle qu'une droite et les éléments manquants (des segments de droite également) d'un objet prédéterminé représentatif d'un objet cible.

Selon un deuxième objet de l'invention, elle concerne un dispositif de détection automatique d'un objet cible pour véhicule automobile, **caractérisé en ce qu**'il comporte une unité de contrôle pour :
- créer deux vues aériennes respectivement à partir d'une image acquise par deux caméras du véhicule automobile, une vue aérienne étant créée par une projection de l'image dans un repère à trois dimensions de coordonnée d'altitude égale à zéro ;
- extraire des contours dans chaque vue aérienne créée, résultant en deux vues de contours ;
- approximer dans chaque vue de contours les contours extraits par des segments de droite, résultant en deux premières vues de segmentation ;
- construire dans chaque première vue de segmentation au moins un objet prédéterminé à partir des segments de droite, résultant en deux deuxièmes vues de segmentation ;
- superposer deux vues de segmentation ; et
- sélectionner dans la superposition au moins un objet prédéterminé, correspondant à un objet cible vu d'une première caméra, qui a :
   o une base commune avec un autre objet prédéterminé ; et
   o une orientation différente de l'autre objet prédéterminé ; l'autre objet prédéterminé correspondant à l'objet cible vu d'une deuxième caméra.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

### Brève description des figures

D'autres caractéristiques et avantages de la présente invention seront mieux compris à l'aide de la description et des dessins non limitatifs parmi lesquels :
- la Fig. 1 représente un diagramme d'un premier mode de réalisation non limitatif du procédé de détection selon l'invention ;
- la Fig. 2 représente un diagramme d'un deuxième mode de réalisation non limitatif du procédé de détection selon l'invention ;
- la Fig. 3 représente schématiquement l'arrière d'un véhicule automobile équipé de deux caméras utilisées par le procédé de détection de la Fig. 1 et de la Fig. 2 ;
- la Fig. 4 est une représentation schématique d'une image acquise respectivement par les deux caméras du véhicule automobile de la Fig. 3 ;
- la Fig. 5 représente schématiquement deux vues d'oiseau créées respectivement à partir des deux images acquises de la Fig. 4 ;
- la Fig. 6 représente schématiquement les deux vues d'oiseau de la Fig. 5 dont les contours on été extraits, résultant en deux vues de contours ;
- la Fig. 7 représente schématiquement les deux vues de contours de la Fig. 6 dont les contours extraits ont été approximés par des segments de droite, résultant en deux premières vues de segmentation ;
- la Fig. 8 représente schématiquement les deux vues de segmentation de la Fig. 7 dont des objets prédéterminés ont été construit à partir de segments de droite, résultant en deux deuxièmes vues de segmentation ;
- la Fig. 9 représente schématiquement la superposition des deux vues de segmentation de la Fig. 8 ;
- la Fig. 10 représente schématiquement la superposition des deux vues de segmentation de la Fig. 7 ;
- la Fig. 11 représente schématiquement la superposition de la Fig. 10 dont des objets prédéterminés ont été construit à partir de segments de droite de la Fig. 7 ;
- la Fig. 12 représente la superposition de la Fig. 11 avec uniquement des objets prédéterminés correspondant à un objet cible vertical ;
- la Fig. 13 est similaire aux deux vues d'oiseau de la Fig. 6 dont uniquement les contours verticaux ont été extraits ;
- la Fig. 14 est similaire aux deux vues d'oiseau de la Fig. 7 dont les segments de droite correspondent uniquement à des contours verticaux extraits ont été déterminés ;
- les Fig. 15, 16 et 17 sont des schémas explicatifs d'une transformée de Hough utilisée pour approximer les contours extraits des Fig. 6 et 10 ; et
- la Fig. 18 illustre un mode de réalisation non limitatif d'un dispositif de mise en oeuvre du procédé de la Fig. 1 ou de la Fig. 2.

### Description détaillée de modes de réalisation non limitatifs de l'invention

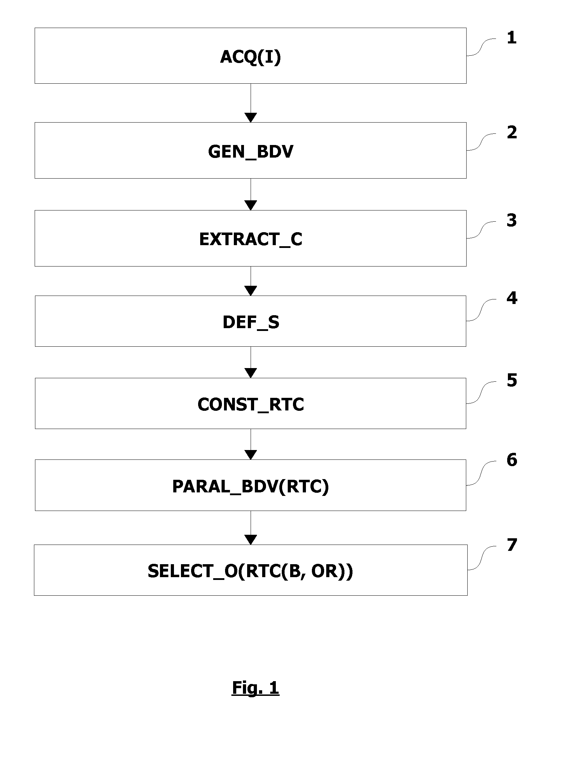

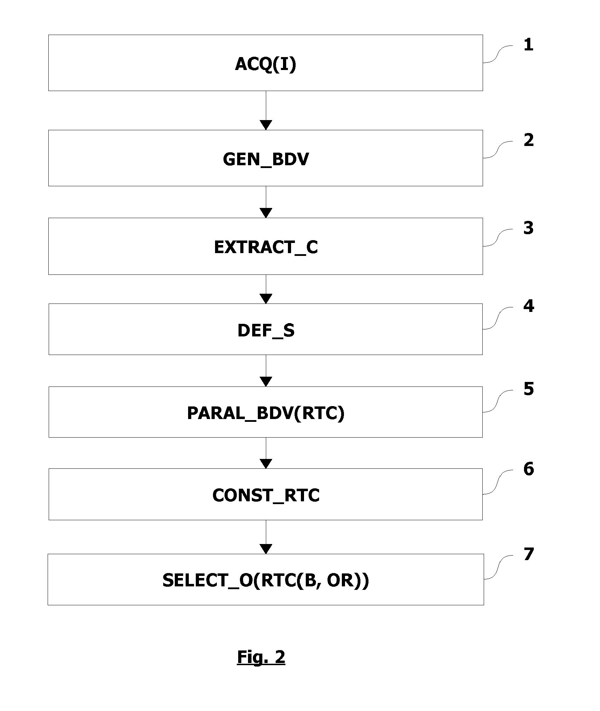

Le procédé de détection automatique d'un objet cible pour véhicule automobile, selon l'invention, est décrit dans deux modes de réalisation non limitatifs à la Fig. 1 et à la Fig. 2.

Par véhicule automobile, on entend tout véhicule comprenant un moteur.

Le procédé de détection comporte les étapes suivantes telles qu'illustrées à la Fig. 1 et à la Fig. 2 :
- créer deux vues aériennes BDV respectivement à partir d'une image acquise I par deux caméras CAM du véhicule automobile V, une vue aérienne étant créée par une projection de l'image I dans un repère à trois dimensions de coordonnée d'altitude z égale à zéro (étape GEN_BDV) ;
- extraire des contours C dans chaque vue aérienne créée BDV, résultant en deux vues de contours BDV1', BDV2' (étape EXTRACT_C) ;
- approximer dans chaque vue de contours BDV'1, BDV2' les contours extraits C par des segments de droite S, résultant en deux premières vues de segmentation BDV1", BDV2" (étape DEF_S) ;
- construire dans chaque première vue de segmentation BDV1", BDV2" au moins un objet prédéterminé RTC à partir des segments de droite S, résultant en deux deuxièmes vues de segmentation BDV1 "', BDV2"' (étape CONST_RTC) ;
- superposer deux vues de segmentation BDV1"-BDV2" ; BDV1"'-BDV2"' (étape PARAL_BDV(RTC)) ; et
- sélectionner dans la superposition au moins un objet prédéterminé RTC, correspondant à un objet cible O vu d'une première caméra CAM, qui a :
   - une base commune avec un autre objet prédéterminé RTC ; et
   - une orientation différente de l'autre objet prédéterminé RTC
l'autre objet prédéterminé RTC correspondant à l'objet cible O vu d'une deuxième caméra CAM (étape SELECT_O(RTC(B, OR))).

Dans un mode de réalisation non limitatif, le procédé comporte en outre une étape supplémentaire :
- D'acquisition d'images I de l'environnement du véhicule V considéré par les deux caméras vidéo CAM (étape ACQ(I)).

On notera que cette étape peut ne pas être comprise dans le procédé décrit, mais peut faire partie d'un autre procédé exécuté en amont du procédé décrit.

Dans un premier mode de réalisation, l'étape de construction d'un objet prédéterminé est effectuée avant l'étape de superposition de deux vues de segmentation telle qu'illustrée à la Fig. 1.

Dans un deuxième mode de réalisation, l'étape de construction d'un objet prédéterminé est effectuée après l'étape de superposition de deux vues de segmentation telle qu'illustrée à la Fig. 2.

Pour la suite de la description, dans le mode de réalisation non limitatif décrit, le procédé comprend l'étape supplémentaire d'acquisition d'images I, et le premier mode de réalisation illustré à la Fig. 1 est décrit.

Les étapes du procédé sont décrites en détail ci-après.

**Dans une première étape 1),** on acquiert deux images 11, 12 de l'environnement du véhicule respectivement par deux caméras vidéo CAM1, CAM2 du véhicule automobile V.

L'acquisition d'images I par une caméra CAM sur un véhicule V, étant connu de l'homme du métier, elle n'est pas décrite ici.

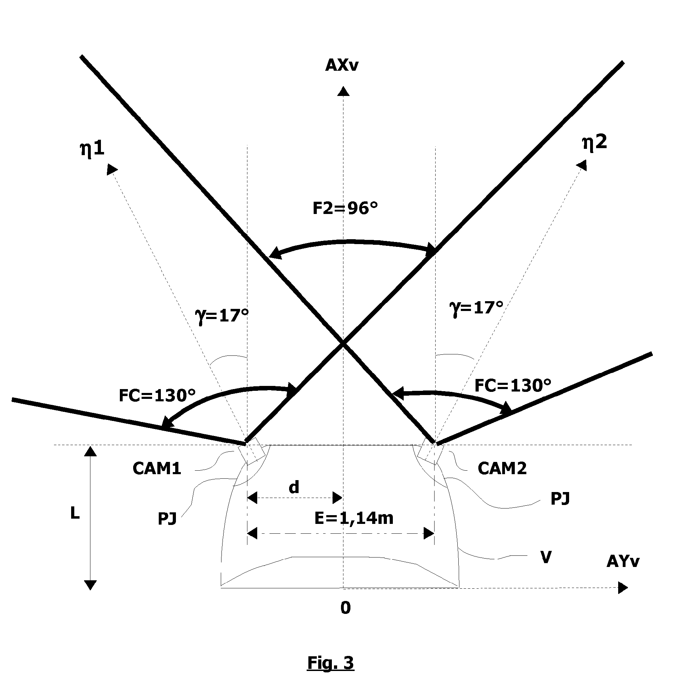

Dans un mode de réalisation non limitatif, ces caméras CAM1, CAM2 sont des caméras grand angle telles qu'illustrées dans l'exemple de la Fig. 3 qui se trouvent dans cet exemple à l'arrière du véhicule V. Cela permet d'avoir un effet de parallaxe important comme on va le voir par la suite.

Dans la suite de la description, on nommera également la première caméra CAM1 caméra gauche, et la deuxième caméra CAM2 caméra droite.

Dans l'exemple non limitatif de la Fig. 3, les caméras CAM1, CAM2 ont un angle d'ouverture FC de 130° et un axe optique respectif non parallèle conduisant à un angle de projection de 17° chacun et en conséquence à un écart d'axe optique de 34°.

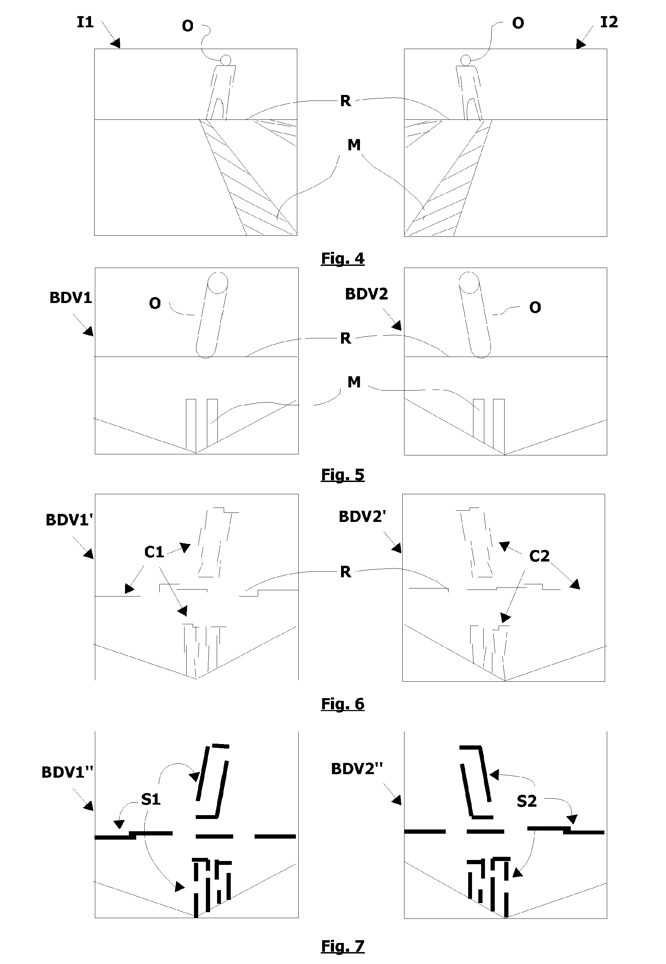

Comme on peut le voir à la Fig. 4, deux images I1 et I2 de l'environnement du véhicule automobile V ont été respectivement acquises par les deux caméras CAM1 et CAM2.

Dans l'exemple de ces images acquises, on peut voir un objet cible O tel qu'un piéton et des marquages au sol (sol appelé également chaussée) M tels qu'un passage piéton (hachuré sur les deux images I1, 12).

Bien entendu cet exemple est non limitatif, et d'autres exemples de caméras grand angle, ainsi que des exemple de caméras petit angle peuvent être également pris.

**Dans une deuxième étape 2),** on crée deux vues aériennes BDV respectivement à partir des images acquises I par les deux caméras CAM du véhicule automobile V, une vue aérienne étant créée par une projection de l'image I dans un repère à trois dimensions de coordonnée d'altitude z est égale à zéro.

Dans un mode de réalisation non limitatif, pour la création des vues aériennes, on utilise la méthode de transformation IPM connue de l'homme du métier couramment appelée en anglais « Inverse Perspective Mapping » développée par messieurs Bertozzi et Broggi, selon laquelle on transforme l'image acquise en modifiant les coordonnées de ses pixels afin de corriger l'effet de perspective d'une scène de l'environnement acquise. L'image ainsi transformée est similaire à une vue aérienne de la route, une telle vue étant couramment appelée par l'homme du métier « vue d'oiseau » et en anglais « bird view ». La transformation de l'image est effectuée notamment par une projection de l'image I dans un repère à trois dimensions de coordonnée d'altitude z égale à zéro. Cela revient donc à faire une projection au sol.

La transformation d'une image en une telle vue aérienne est également appelée rectification homographique.

On notera qu'en particulier les informations suivantes sont utilisées dans cette méthode :
- la position (L, d, h) de la caméra CAM dans un repère 3D déterminé, dans l'exemple pris un repère véhicule RV (Axv, AYv, AZv) ;
- l'axe optique de la caméra ;
- η, la projection de l'axe optique de la caméra sur le plan AXv, AYv, AZv=0, projection appelée en anglais « versor » qui donne un angle de projection y permettant de connaître la direction dans laquelle pointe la caméra ;
- un angle φ (non représenté) déterminé par l'axe optique et la projection η par rapport à l'axe Azv qui permet de donner l'inclinaison de la caméra.
- L'angle d'ouverture FC de la caméra CAM; et enfin
- La résolution de la caméra CAM.

La méthode IPM n'est pas décrite plus en détail ci-après car elle est bien connue de l'homme du métier.

Bien entendu, la méthode IPM n'est pas limitative, et on peut utiliser d'autres méthodes dites homographiques pour créer de telles vues aériennes.

Sur la Fig. 5, on peut voir les deux vues aériennes BDV1 et BDV2 crées respectivement à partir des deux images I1 et I2 acquises précédemment.

Sur ces deux vues, on peut voir représentés schématiquement d'une part l'objet cible piéton O, et d'autre part le passage piéton M ainsi que la ligne de démarcation de la route R sur laquelle se trouve le piéton et le véhicule automobile V.

Du fait de l'orientation différente des deux caméras CAM et donc de leur axe optique non parallèles, on peut observer que les objets cibles verticaux (altitude z différente de zéro) tels qu'un piéton sont orientés différemment dans les deux vues aériennes BDV1 et BDV2 créées tandis que les objets cibles dits couchés (altitude z égale à zéro) tels que les marquages au sol M sont orientés de la même manière.

En effet, un objet cible vertical O vu de deux points de vue différents (caméra fauche CAM1 et caméra droite CAM2) n'a pas la même orientation après la transformation IPM alors qu'un objet cible couché (au sol) est vu avec la même orientation. Ce dernier est en effet vu de la même manière par les deux caméras CAM1, CAM2.

Cet effet est appelé effet de parallaxe.

On notera que plus l'angle d'une caméra CAM1, CAM2 sera ouvert, plus l'effet de parallaxe entre deux caméras CAM1 et CAM2 sera accentué.

Ainsi, dans l'exemple pris des caméras grand angle, on a un effet de parallaxe très accentué.

Bien entendu, cet effet, bien que plus faible, est également visible pour des caméras petit angle, dans un exemple non limitatif même de 20° ou encore de 40° d'angle d'ouverture.

**Dans une troisième étape 3),** on extrait les contours C dans chaque vue aérienne créée BDV, résultant en deux vues de contours BDV1', BDV2'.

Dans des exemple non limitatifs, des méthodes de détection de contours (appelées « edge method » en anglais) telles que les méthodes Sobel, Prewitt, Roberts, Zero-cross, Canny etc. peuvent être utilisées.

Ces méthodes ne sont pas décrites ici car elles sont bien connues de l'homme du métier.

Comme on peut le voir dans l'exemple non limitatif de la Fig. 6, les contours C1, C2 respectivement dans les deux vues BDV1 et BDV2 ont été extraits, résultant en deux vues de contours BDV1', BDV2'. Ces contours représentent notamment les contours de l'objet cible piéton O, des marquages au sol M et de la ligne de démarcation de la route R.

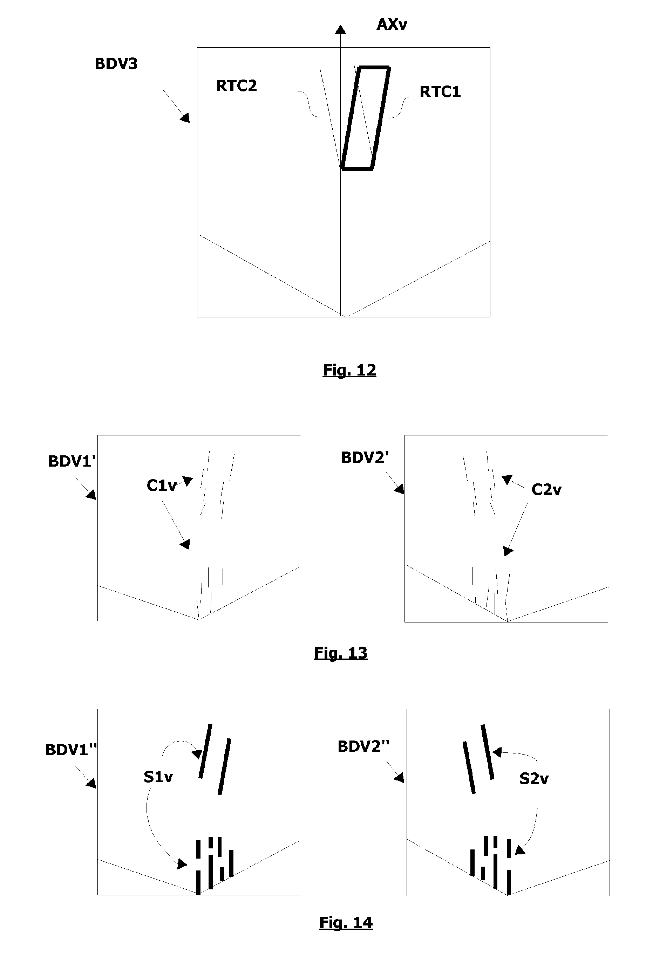

Dans un mode de réalisation non limitatif, seuls les contours verticaux C sont extraits, l'étape d'extraction des contours C s'effectuant sur les segments de droite verticaux uniquement. Cela permet de gagner en temps de traitement. On peut voir un exemple non limitatif de contours verticaux C1v, C2v extraits sur la Fig. 13.

**Dans une quatrième étape 4),** on approxime dans chaque vue de contours BDV1', BDV2' les contours extraits C par des segments de droite S, résultant en deux premières vues de segmentation BDV1", BDV2".

Afin de déterminer des segments de droite S à partir des contours extraits, dans un mode de réalisation non limitatif, la méthode de la transformée de Hough est utilisée.

La transformée de Hough permet d'accumuler des évidences sur l'existence d'une forme particulière telle qu'une droite, un cercle ou une ellipse. Dans le cas de l'application prise, on cherche à déterminer une forme telle qu'une droite.

Le principe général de la transformée de Hough est d'accumuler de l'évidence sur la présence de courbes paramétriques en vue de les détecter.

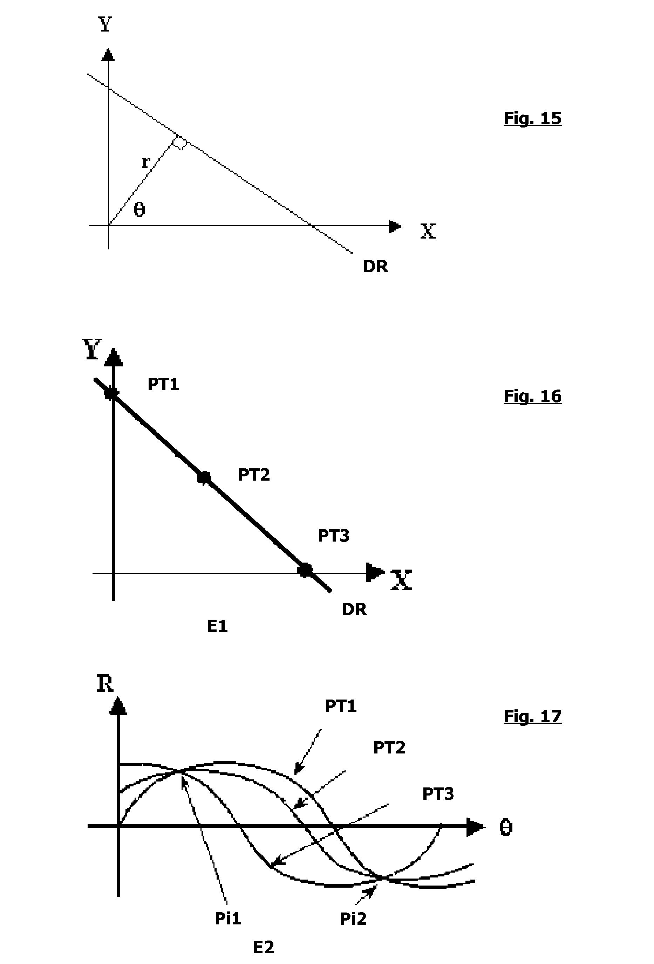

Dans notre cas, ces courbes paramétriques sont définies, dans un espace cartésien E1(X, Y), par des droites d'équation y - mx - c = 0 avec m et c les paramètres définissant une droite DR telle que représentée à la Fig. 16. Par commodité, pour représenter les droites, une représentation polaire, dans un espace de paramètres E2(R, θ), est utilisée r = x.cosθ+y.sinθ telle que représentée à la Fig. 15 de manière à borner l'espace de recherche (r, θ), avec θ borné entre [0-2π].

Une droite DR est repérée par la distance r et l'angle θ, avec θ l'angle de la projection orthogonale de la droite considérée passant par l'origine.

Ainsi, la forme associée a un point PT d'une droite est une sinusoïde dans l'espace des paramètres E2. Cette paramétrisation polaire présente l'avantage de fournir des domaines de variations finis.

L'espace des paramètres E2 (R, θ) est communément appelé accumulateur. En effet, les points PT appartenant à la même droite génèrent plusieurs sigmoïdes qui se croisent aux points d'intersection Pi(r, θ), paramètres de la droite DR tels que représentés à la Fig. 17.

Théoriquement, un point d'intersection Pi comporte autant de votes (par exemple si dix points constituent la droite dans la Fig. 16 alors Pi aura la valeur dix dans la Fig. 17) qu'il y a de points PT constituant la droite. Ainsi, un point d'intersection Pi dans l'espace des paramètres E2 (R,θ) signifie qu'il existe une droite DR dans l'espace cartésien E1 (X,Y).

Ainsi, on recherche des droites ou segments de droite dans une vue aérienne BDV en utilisant la transformée de Hough pour :
- effectuer une projection des points des contours extraits C dans l'espace (R, θ) (i.e. projection entre l'espace de l'image (X,Y) et l'espace de paramètres (R, θ)) ;
- trouver les valeurs maximales dans l'accumulateur (points intersection Pi), couple (r, θ) représentatif d'une droite ;
- reprojetant chaque point d'intersection Pi dans l'espace cartésien E1 (X, Y), un point d'intersection Pi donnant une droite DR : y - mx -c=0;
- avec la vue aérienne d'origine créée correspondante BDV1, BDV2, vérifier les points de la vue BDV qui se superposent au droites trouvées DR dans l'étape précédente ; et
- garder les droites DR qui se superposent avec les points de la vue BDV, ces droites étant les segments de droite S recherchés.

Ainsi, comme on peut le voir sur la Fig. 7, des segments de droite S1, S2 ont été trouvés respectivement à partir des contours C extraits précédemment dans chaque vue de contours BDV1', BDV2'. On obtient deux premières vues de segmentation BDV1" et BDV2".

Dans un mode de réalisation non limitatif, seuls les segments de droite correspondant aux contours verticaux C extraits sont déterminés. Cela permet de gagner en temps de traitement. On peut voir un exemple non limitatif de segments de droite dits verticaux S1v, S2v sur la Fig. 14.

**Dans une cinquième étape 5),** on construit dans chaque première vue de segmentation BDV1", BDV2" au moins un objet prédéterminé RTC à partir des segments de droite S, résultant en deux deuxièmes vues de segmentation BDV1"', BDV2"'.

Dans un premier exemple non limitatif, l'objet prédéterminé RTC est un rectangle de ratio ½ pour le cas d'un objet cible O tel qu'un piéton.

Bien entendu, si l'objet cible O à détecter est différent d'un piéton, par exemple si c'est un véhicule, d'autres ratios adéquats seront pris en compte pour le rectangle.

A partir des segments de droite trouvés S à l'étape précédente par la transformée de Hough on en déduit le rectangle RTC correspondant à l'objet cible recherché O. On notera que la transformée de Hough décrite précédemment permet d'avoir une bonne robustesse contre les discontinuités d'une forme telle qu'une droite et les éléments manquants (des segments de droite également) d'un objet prédéterminé RTC représentatif d'un objet cible O.

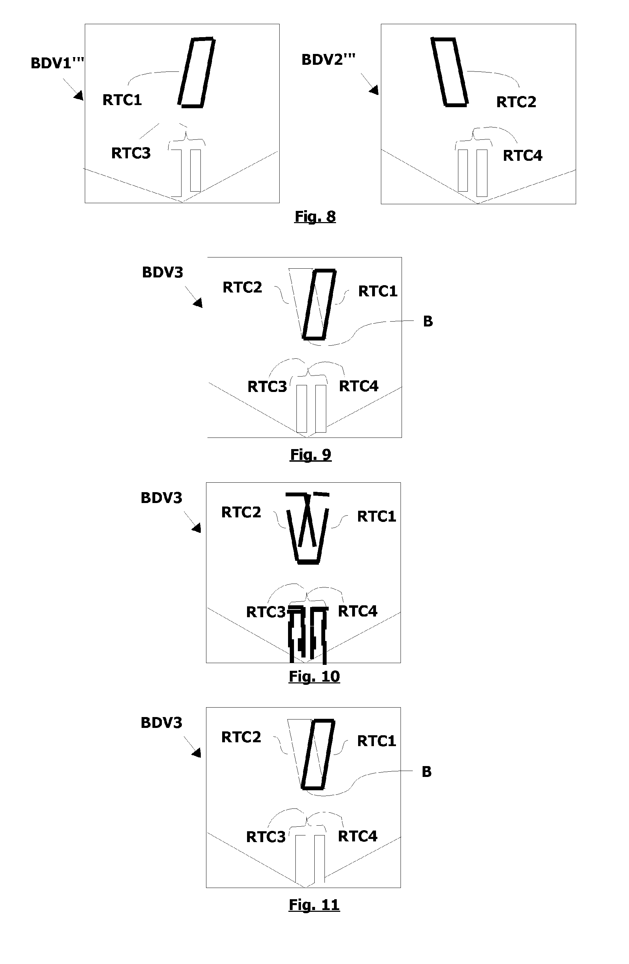

Comme on peut le voir à la Fig. 8, deux rectangles RTC1 et RTC2 représentatifs d'un objet cible O tel qu'un piéton ont été construit, tandis que deux autres rectangles RTC3 et RTC4 représentatifs d'un objet cible tel que des marquages au sol ont été également construit.

On notera que dans un premier mode de réalisation non limitatif, tel qu'illustré à la Fig. 8 et à la Fig. 9, cette étape de construction d'objets prédéterminés s'effectue avant l'étape de superposition décrite ci-après.

Dans un deuxième mode de réalisation non limitatif, tel qu'illustré à la Fig. 10 et à la Fig. 11, cette étape de construction d'objets prédéterminés s'effectue après l'étape de superposition décrite ci-après.

**Dans une sixième étape 6),** on superpose deux vues de segmentation BDV1"-BDV2" ; BDV1"'-BDV2"' ;

Comme on va le voir par la suite, cette superposition va permettre par la suite de sélectionner les objets prédéterminés ayant une base commune (contact avec le sol) de manière à comparer l'orientation d'un objet prédéterminé dans une vue de segmentation avec l'orientation d'un objet prédéterminé correspondant dans l'autre vue de segmentation.

On notera que dans le mode de réalisation décrit où l'étape de construction d'objets prédéterminés s'est effectué avant cette sixième étape de superposition, les vues de segmentations concernées superposées sont ainsi les deux deuxièmes vues de segmentation BDV1"' et BDV2"', résultant en une troisième vue BDV3 tel qu'illustré à la Fig. 9.

Dans l'autre mode de réalisation, l'étape de construction d'objets prédéterminés s'effectue après cette sixième étape de superposition, les vues de segmentations concernées superposées sont ainsi les deux premières vues de segmentation BDV1" et BDV2", résultant en une troisième vue BDV3 tel qu'illustré à la Fig. 10.

On remarquera que comme un objet cible couché est vu de la même manière par les deux caméras CAM1, CAM2, lorsque les deux vues de segmentation (BDV1"- BDV2" ou BDV1"'-BDV2"') sont superposées, les objets prédéterminés correspondant à cet objet cible couché dans chaque vue de segmentation seront confondus, comme on peut le voir à la Fig. 9 ou à la Fig. 10.

Ce n'est pas le cas pour un objet prédéterminé RTC correspondant à un objet cible vertical, comme on peut le voir à la Fig. 9 ou à la Fig. 11, qui lorsqu'il est vu de deux points de vue différents (les deux caméras) n'a pas la même orientation après une rectification homographique (« bird view », altitude z = 0).

**Dans une septième étape 7),** on sélectionne dans la superposition au moins un objet prédéterminé RTC1, correspondant à un objet cible O vu d'une première caméra CAM1, qui a :
- une base commune B avec un autre objet prédéterminé RTC2 ; et
- une orientation différente de l'autre objet prédéterminé RTC2 ;
l'autre objet prédéterminé RTC correspondant à l'objet cible O vu d'une deuxième caméra CAM2.

Comme on peut le voir à la Fig. 9, dans la superposition illustrée sur la troisième vue BDV3, les objets prédéterminés, dans l'exemple les rectangles RTC1 et RTC2 représentatifs respectivement d'un même objet cible O vu par la caméra gauche CAM1 et la caméra droite CAM2, ont une base commune B.

Cette base commune B représentent les points d'un rectangle RTC1 d'une vue BDV1"' qui sont à une altitude z égale à zéro (points au contact du sol) et qui ont la même position que ceux d'un autre rectangle RTC2 de l'autre vue BDV2"'.

Ainsi, on sélectionne dans la superposition au moins un objet prédéterminé RTC1 correspondant à un objet cible O vu d'une première caméra CAM1, dont les points qui ont une altitude z égale à zéro ont la même position que ceux d'un autre objet prédéterminé RTC2 correspondant à l'objet cible O vu d'une deuxième caméra CAM2.

Le fait de sélectionner ainsi un rectangle RTC1 qui a une base commune B avec un autre rectangle garantit que ce sont les rectangles correspondant à un même objet cible qui est vu par les deux caméras CAM1 et CAM2.

Par ailleurs, le fait de sélectionner un objet prédéterminé RTC1 correspondant à un objet cible O vu d'une première caméra CAM1, qui a en outre une orientation différente d'un objet prédéterminé RTC2 correspondant à l'objet cible O vu d'une deuxième caméra CAM2, permet de sélectionner les objets prédéterminés correspondant à un objet cible vertical.

On conserve ainsi que les objets cibles verticaux représentatifs d'un obstacle pou un véhicule V.

On notera que si l'orientation est égale, alors on est en présence d'un objet cible couché qui n'est donc pas considéré comme un obstacle. En effet, seuls les objets verticaux (altitude différente de zéro) présentent une orientation différente, tandis que les objets dits couchés (altitude égale à zéro) ont la même orientation.

L'orientation permet ainsi de différencier les objets cibles verticaux des objets cibles couchés.

On notera que l'orientation est déterminée par rapport à l'axe AxV du repère RV tel qu'illustré à la Fig. 12. En outre, l'objet RTC1 a un angle positif non nul avec l'axe AxV tandis que l'objet RTC2 a un angle négatif non nul. Un objet parallèle avec l'axe AxV aura un angle nul.

On rappelle que l'on a pris un même repère déterminé RV et donc une même origine pour la création des vues aériennes BDV1 et BDV2 ce qui garantit qu'un même objet vu par les deux caméras gauche CAM1 et droite CAM2 aura une base commune dans la superposition. On rappelle que dans l'exemple pris, dans un mode de réalisation non limitatif, le repère déterminé RV est un repère véhicule tel qu'illustré à la Fig. 3 avec:
- l'axe des abscisses AXv se situant au milieu du véhicule,
- L'axe des ordonnées AYv se situant à l'arrière du véhicule,
- L'axe des altitudes AZv étant égale à zéro (on se trouve au niveau des pneus du véhicule, c'est-à-dire au niveau du sol).

Ainsi, le procédé décrit permet de détecter simplement un objet cible O vertical en utilisant l'effet parallaxe créé naturellement par des caméras vidéo CAM. Comme les caméras vidéo ont une portée de détection supérieure à des capteurs de détection spécifiques, la portée de détection globale d'un objet cible est augmentée.

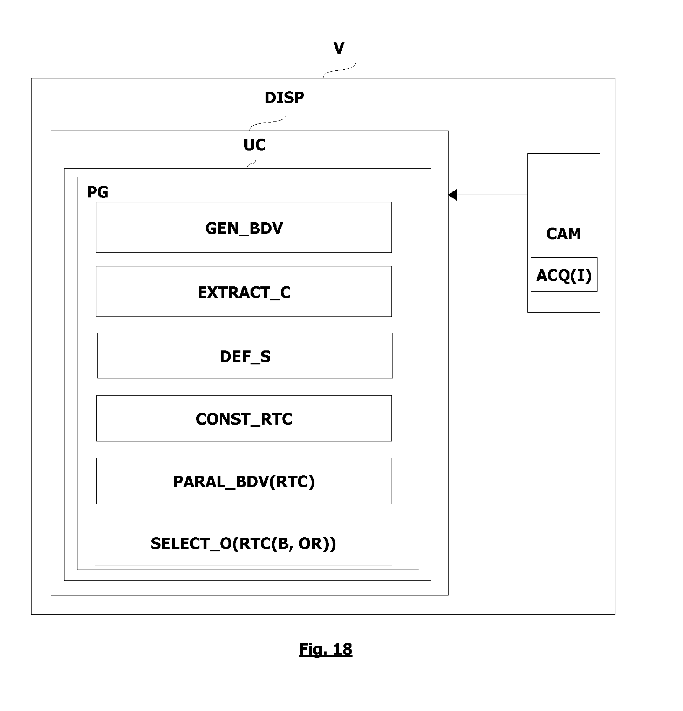

Le procédé de l'invention est mis en oeuvre par un dispositif de détection DISP automatique d'un objet cible pour véhicule automobile, représenté à la Fig. 18.

Ce dispositif DISP est intégré dans le véhicule V. Ce dispositif DISP comporte notamment :
- une unité de contrôle UC pour :
- créer deux vues aériennes BDV respectivement à partir d'une image acquise I par deux caméras CAM du véhicule automobile V, une vue aérienne étant créée par une projection de l'image I dans un repère à trois dimensions de coordonnée d'altitude z égale à zéro ;
- extraire des contours C dans chaque vue aérienne créée BDV, résultant en deux vues de contours BDV1', BDV2' ;
- approximer dans chaque vue de contours BDV'1, BDV2' les contours extraits C par des segments de droite S, résultant en deux premières vues de segmentation BDV1", BDV2" ;
- construire dans chaque première vue de segmentation BDV1", BDV2" au moins un objet prédéterminé RTC à partir des segments de droite S, résultant en deux deuxièmes vues de segmentation BDV1"', BDV2"' ;
- superposer deux vues de segmentation BDV1"-BDV2" ; BDV1"'-BDV2"' ; et
- sélectionner dans la superposition au moins un objet prédéterminé RTC, correspondant à un objet cible O vu d'une première caméra CAM, qui a :
   - une base commune avec un autre objet prédéterminé RTC ; et
   - une orientation différente de l'autre objet prédéterminé RTC;
l'autre objet prédéterminé RTC correspondant à l'objet cible O vu d'une deuxième caméra CAM .

Dans un mode de réalisation non limitatif, le dispositif de détection DISP peut en outre comporter les caméras vidéo CAM permettant d'acquérir une image I.

Dans cette application, deux caméras CAM1 et CAM2 sont embarquées sur le véhicule V et sont définies comme suit.

Les deux caméras CAM1 et CAM2 sont des caméras grand angle (par exemple à angle de vue horizontal de 130°) ou très grand angle (par exemple à angle de vue horizontal de 170°) implantées à l'arrière du véhicule V, en dessous de chaque projecteur arrière du véhicule V, et dirigées sensiblement vers l'arrière ou vers un axe orienté vers la diagonale extérieure arrière.

Dans un exemple non limitatif, les caméras CAM1 et CAM2 acquièrent 30 images par seconde et est par exemple du type VGA de définition 640*480 et comporte une lentille (non représentée) à cet effet.

Par ailleurs, elles comportent un écart large entre elles, écart E appelé base large. Dans l'exemple non limitatif pris du véhicule illustré à la Fig. 3, la base est de 1,14m.

Le fait d'avoir un angle de vue (ou champ) grand angle, une orientation différente pour les deux caméras, et une base large a pour conséquence que l'effet de parallaxe décrit précédemment est très prononcé.

La position, l'orientation et le nombre de caméras d'un tel dispositif ne sont évidemment pas limités à ces exemples.

Ainsi, on peut également avoir des caméras avant par exemple.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 18, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, dans un mode de réalisation non limitatif, on peut imaginer une combinaison entre une détection effectuée par des capteurs de détection spécifiques tels que des capteurs UPA et une détection effectuée par les caméras CAM1, CAM2 afin d'obtenir une fusion des données acquises lors de ces détections et d'avoir une détection plus précise.

Dans un mode de réalisation non limitatif, on peut également utiliser des caméras petit angle, ou une combinaison de caméras grand angle et petit angle.

Ainsi, l'invention présente notamment les avantages suivants :
- Elle permet d'avoir une portée de détection plus grande grâce à la portée des caméras vidéo qui est supérieure à celle de capteurs de détection spécifiques ;
- Elle évite d'utiliser une détection qui dépend des ombres portées des objets cibles, et donc qui dépend de l'illumination dans chaque image d'une scène représentative de l'environnement du véhicule ;
- Elle permet d'obtenir une détection simple sans détection de distance ;
- Elle n'effectue aucune segmentation de région (par différence d'images par exemple) que l'on peut appeler « area base » en anglais mais utilise uniquement une extraction de caractéristiques spécifiques que l'on peut appeler « feature-base » en anglais, à savoir les segments de droite ayant une base commune et un angle de projection différent ;
- Elle permet de différencier simplement les objets cibles verticaux des objets cibles dits couchés grâce à la base commune et les orientations différentes et ainsi de détecter notamment des obstacles tels que des piétons ;
- Elle est particulièrement bien adaptée pour la détection d'obstacle tel que des piétons grâce à l'application d'un ratio simple ;
- Elle prend avantage de l'effet parallaxe qui se crée naturellement entre deux caméras vidéos ayant des axes optiques différents ; Ainsi, cela évite d'utiliser des caméras vidéos spécifiques dédiées à la stéréovision, ces caméras comportant des axes optiques parallèles et des gains et des temps d'intégration identiques ;
- Elle permet d'utiliser des caméras vidéo qui sont utilisées en général pour d'autres fonctions que la détection d'obstacle par exemples pour des fonctions d'aide à la conduite lors de manoeuvres à basse vitesse. Pour ces autres fonctions, ces caméras grand angle sont utilisées pour la vision arrière offrant une visualisation sur un écran d'affichage de l'environnement arrière du véhicule au conducteur et lui permettant ainsi de comprendre instantanément la localisation de la scène reproduite de l'environnement du véhicule. Les images qui restituent l'environnement arrière du véhicule ne sont en général pas utilisées pour la détection d'objet cible. Une telle détection serait peu fiable car serait sujette à interprétation du conducteur qui ne se baserait que sur les images qu'il visualise à l'écran ; cette interprétation serait d'autant plus faussée que en général une telle restitution des images comportent des distorsions importantes (les objets verticaux se retrouvant souvent déformés et obliques) du fait notamment des angles de vues grand angle utilisés. Ainsi, cela permet à un constructeur automobile d'éviter de multiplier le nombre de caméras sur le véhicule en ayant des caméras dédiées à la détection et des caméras dédiées à l'aide à la conduite. On a ainsi une réduction de coûts importante. Cela permet ainsi à un constructeur automobile d'utiliser un système de vision équipé d'au moins deux caméras, déjà existant ; et
- Enfin grâce à la transformée de Hough, on s'affranchit des contraintes de gains et des temps propres des caméras vidéos car on s'affranchit de l'information intensité lumineuse d'un pixel.

## Revendications

1. Procédé de détection automatique d'un objet cible (O) pour véhicule automobile (V), **caractérisé en ce qu'**il comporte les étapes de :
- créer deux vues aériennes (BDV) respectivement à partir d'une image acquise (I) par deux caméras (CAM) du véhicule automobile (V), une vue aérienne étant créée par une projection de l'image (I) dans un repère à trois dimensions de coordonnée d'altitude (z) égale à zéro ;
- extraire des contours (C) dans chaque vue aérienne créée (BDV), résultant en deux vues de contours (BDV1', BDV2') ;
- approximer dans chaque vue de contours (BDV1', BDV2') les contours extraits (C) par des segments de droite (S), résultant en deux premières vues de segmentation (BDV1", BDV2") ;
- construire dans chaque première vue de segmentation (BDV1", BDV2") au moins un objet prédéterminé (RTC) à partir des segments de droite (S), résultant en deux deuxièmes vues de segmentation (BDV1"', BDV2"') ;
- superposer deux vues de segmentation (BDV1"-BDV2" ; BDV1"'-BDV2"') ; et
- sélectionner dans la superposition au moins un objet prédéterminé (RTC), correspondant à un objet cible (O) vu d'une première caméra (CAM), qui a :
- une base commune avec un autre objet prédéterminé (RTC) ; et
- une orientation différente de l'autre objet prédéterminé (RTC) ;
l'autre objet prédéterminé (RTC) correspondant à l'objet cible (O) vu d'une deuxième caméra (CAM).

2. Procédé de détection selon la revendication 1, selon lequel les caméras (CAM) sont des caméras grand angle.

3. Procédé de détection selon la revendication 1 ou 2, selon lequel l'étape d'extraction des contours (C) s'effectue sur les segments de droite verticaux uniquement.

4. Procédé de détection selon l'une des revendications précédentes, selon lequel l'étape de construction d'un objet prédéterminé (RTC) est effectuée avant l'étape de superposition de deux vues de segmentation.

5. Procédé de détection selon l'une des revendications précédentes, selon lequel l'étape de construction d'un objet prédéterminé (RTC) est effectuée après l'étape de superposition de deux vues de segmentation.

6. Procédé de détection selon l'une des revendications précédentes, selon lequel l'étape d'approximation des contours extraits s'effectue au moyen d'une transformée de Hough.

7. Dispositif (DISP) de détection automatique d'un objet cible (O) pour véhicule automobile (V), **caractérisé en ce qu'**il comporte une unité de contrôle (UC) pour :
- créer deux vues aériennes (BDV) respectivement à partir d'une image acquise (I) par deux caméras (CAM) du véhicule automobile (V), une vue aérienne étant créée par une projection de l'image (I) dans un repère à trois dimensions de coordonnée d'altitude (z) égale à zéro ;
- extraire des contours (C) dans chaque vue aérienne créée (BDV), résultant en deux vues de contours (BDV1', BDV2') ;
- approximer dans chaque vue de contours (BDV1') les contours extraits (C) par des segments de droite (S), résultant en deux premières vues de segmentation (BDV1") ;
- construire dans chaque première vue de segmentation (BDV1") au moins un objet prédéterminé (RTC) à partir des segments de droite (S), résultant en deux deuxièmes vues de segmentation (BDV1"'),
- superposer deux vues de segmentation (BDV1 ", BDV1"') ; et
- sélectionner dans la superposition au moins un objet prédéterminé (RTC), correspondant à un objet cible (O) vu d'une première caméra (CAM), qui a :
- une base commune avec un autre objet prédéterminé (RTC) ; et
- une orientation différente de l'autre objet prédéterminé (RTC) ;
l'autre objet prédéterminé (RTC) correspondant à l'objet cible (O) vu d'une deuxième caméra (CAM).

8. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 6.
